# EUROPEAN PATENT SPECIFICATION

(11) **EP 2 625 969 B1**
(45) Date of publication and mention of the grant of the patent: **14.08.2019**
(21) Application number: 12158091.4
(22) Date of filing: 05.03.2012
(51) Int. Cl.: A23L 13/40, A23L 13/60

(54) **Method for the preparation of oil-containing meat-based products comprising a direct oil addition protocol**
Verfahren zur Herstellung von ölhaltigen Produkten auf Fleischbasis mit einem direkten Ölzusatzprotokoll
Procédé pour la préparation de produits à base de viande contenant de l'huile comportant un protocole d'ajout direct d'huile

(30) Priority: 08.02.2012 GR 20120100082
(43) Date of publication of application: 14.08.2013
(73) Proprietor: Novaplot Enterprises Ltd., Limassol 3095 (CY)
(72) Inventor: DOMAZAKIS, Emmanouil, 74100 Rethymnon (GR); DOMAZAKIS, Konstantinos, 74100 Rethymnon (GR)
(74) Representative: Lang, Johannes

(56) References cited:
- EP-A1- 2 163 163
- EP-A1- 2 263 482
- EP-A1- 2 556 754
- WO-A1-02/065860
- WO-A1-02/074105
- WO-A1-2004/082404
- WO-A1-2005/094617
- WO-A1-2012/094397
- DE-A1- 2 639 177
- DE-A1-102004 050 841
- JP-A- 2000 157 218
- KR-A- 20100 110 100
- US-A- 3 615 583
- US-A- 4 784 870
- US-A- 4 988 524
- US-A- 5 116 629
- US-A1- 2002 155 201
- JIMENEZ-COLMENERO F ET AL: "Influence of emulsified olive oil stabilizing system used for pork backfat replacement in frankfurters", FOOD RESEARCH INTERNATIONAL, ELSEVIER APPLIED SCIENCE, BARKING, GB, vol. 43, no. 8, 1 October 2010 (2010-10-01), pages 2068-2076, XP027351281, ISSN: 0963-9969 [retrieved on 2010-06-30]

## Description

The present invention relates to oil-containing meat-based products, preferably products made of finely or/and coarsely comminuted meat or minced meat, which exhibit exceptional stability. Moreover, the present invention pertains to a process for preparing said oil-containing meat-based products, comprising a simultaneous addition of oil and aqueous medium to a meat preparation, preferably in a multi-step mode.

Concerns have been expressed that a high intake of saturated fats might have adverse effects on health risks. For this reason, the recent views on dietary issues focus on the concept of replacing the animal fats, with vegetable oils rich in unsaturated fatty acids, whenever possible.

Meat-based products containing vegetable oil are known and they can essentially be prepared by two different methods of incorporating the oil, namely the direct incorporation, i.e. by direct admixing the oil into the meat preparation during the production of the latter, and the indirect incorporation, i.e. by pre-emulsifying the oil before addition to the meat preparation or by using a carrier medium. Examples of direct admixture of oil into meat-based preparations have been demonstrated by EP 1361804 and EP 2263482. EP 1361804 describes a process for the preparation of olive oil-containing emulsion-type products made of finely comminuted meat, which includes a single step of adding olive oil, after the finely comminuted meat has been mixed with water, salt, polyphosphoric salts, vegetable proteins, milk proteins and starch. EP 2263482, on the other hand, deals with the provision of a novel methodology for preparing oil-containing meat-based products, which allows the use of a reduced amount of additives selected from emulsifying agents, stabilizing agents and/or thickening agents. The object of the latter invention was solved by the multi-step addition of oil.

KR 20100110100 A relates to a method for the manufacture of low-fat sausages by the addition of grapeseed oil and rice bran dietary fiber.

US 5116629 A relates to processed meat food products, which contain nonhydrogenated fish oil, stabilized by the incorporation of fructose in the food product.

US 3615583 A discloses a whipped meat food product, for use as a dip or spread, and a method for preparing the same. The principal ingredient of the dip or spread is a comminuted meat product such as sausage emulsion which has been heat processed or otherwise denatured.

EP 2 163 163 A1 refers to an oil composition, comprising oil and broth, a method for its preparation, and its use for the preparation of oil containing meat-based products.

EP 2556754 A1 relates to the use of a composition comprising skin connective tissue from meat-supplying animals, as carrier for the incorporation of oil into meat-based products.

Jimenez-Colmenero et al. (2010) describes emulsified olive oil stabilizing systems used for pork backfat replacement in frankfurters.

WO 02/074105 A1 relates to a method for incorporating omega-3-oils into processed food products, such as seafoods, which incorporates PUFA oils into substantially hydrophilic foods to produce semi-solid food preparations. Said method includes the admixture of at least one PUFA oil with said substantially hydrophilic food, said at least one PUFA oil being adsorbed onto a solid carrier, or being in the form of a stable emulsion in a liquid carrier.

JP 2000 157218 A describes an oil-in-water drop type emulsified liquid for processing meat, containing an edible fat or oil, a mixture of gelatinized starch with beta-starch and an emulsifier.

US 2002/155201 A1 discloses an emulsion for processed meat which comprises (A) oil and fat of animal and plant, (B) at least one substance selected from (a) at least one compound selected from sucrose fatty acid esters, monoglycerides, polyglycerides and lecithins and (b) at least one substance selected from proteins of animals and plants, hydrolysis protein and enzyme decomposed protein, and (C) at least one compound selected from basic amino acids and salts thereof, and a processed meat comprising the above emulsion which is uniformly distributed in the meat.

DE 102004050841 A1 relates to the preparation of a long-lasting sausage, preferably a horse sausage, made of horse meat, horse fat and vegetable oil, said method comprising of processing the components by e.g. mincing in the cutter under addition of germ reduced spice mixture of sugar material, stabilizer, antioxidant, acidifier and preservatives to form the raw sausage.

US 4784870 A relates to a process for preparing a paste product which comprises mixing a heat gellable protein paste with an acidic paste in a low degree of homogeneity and heating to gelatinize the resulting mixture.

WO 2012/094397 refers to a meat product composition, comprising of a fat emulsion containing a highly unsaturated liquid edible oil, a highly saturated oil, a fiber component and a thickening component.

US 4988524 A discloses a method for processing raw meat, which comprises injecting an emulsified aqueous mixture comprising an oil or fat which is solid at normal temperature and emulsified with a casein alkali salt decomposed with a milk coagulating enzyme; and calcium ion, into raw meat tissue, followed by coagulation and fixing of the emulsion.

DE 2639177 A1 describes a dietary low-fat meat paste made by: (1) working high protein, low fat meat with skimmed milk to give a uniform mass and (2) mixing this mass with an emulsion of skimmed milk, sepd. milk protein and vegetable oil.

EP 2263482 A1 discloses a method for the preparation of oil-containing meat-based products, characterized in that a maximum of one additive selected from the group consisting of emulsifying agents, stabilizing agents and thickening agents is added during the preparation of the oil-containing meat-based products, wherein the method is based on a multi-step addition of the oil.

WO 2005/094617 A1 discloses a method for the production of olive oil-containing meat-based products made of entire muscular tissue.

WO 2004/082404 A1 relates to a preparation method for minced meat products with the addition of feta dispersed throughout the product and the incorporation of olive oil, which involves the stages of: (a) mixing of meat with water, salt, breadcrumbs and plant fibres (b) addition of olive oil and mixing (c) addition of feta (d) mixing and refrigeration application with CO₂ (e) forming of the mixture (f) heat treatment and (g) deep-freezing of the product. WO 2004/082404 A1 further relates to a preparation method for minced meat products filled with a feta filling and incorporation of olive oil in an extruder type machine.

WO 02/065860 A1 refers to a method of production of goods based on finely comminuted meat with direct addition of olive oil, which includes the following stages: a) mixture of meat with H₂O, salt, poli-phosphoric salts, preservatives, vegetable proteins, milk proteins and starch, b) insertion of olive oil and continuation of mixture, c) encasement of the mixture with simultaneous application of vacuum and pasteurization.

The object of the present invention is to enable stability in a meat emulsion-based system, comprising oil in the maximum technologically feasible quantity, as permitted by a direct oil addition method, which may be related with absence of added emulsifiers and gelling agents. This aim is accomplished by the use of a direct oil addition protocol, that comprises the simultaneous addition of oil and an aqueous medium into a meat preparation. According to the herein disclosed method, a quantity of oil is added simultaneously, with a quantity of an aqueous medium in a meat preparation. The simultaneous admixture of the liquid oil and an aqueous medium in a meat preparation, as an oil addition protocol, constitutes a novel approach for achieving maximum stability of oil incorporation. The invention, thus relates to a process for preparing meat-based products according to claim 1, wherein the process comprises a simultaneous addition of oil and aqueous medium in the meat preparation. Preferably, this process takes place in a multi-step mode, more preferably in a two-step mode. The invention further relates to meat-based products, obtainable by that process. Preferred embodiments of the invention are described in the description hereinafter and the claims.

In the context of the present invention, the term "meat-based products", whenever used herein, comprises products made of finely comminuted meat, for example cooked sausages (such as frankfurter-type sausages, parizers, mortadella-type, etc), products based on coarsely comminuted meat, for example raw sausages (such as country fresh sausages, breakfast-type sausages, etc), products based on minced-meat (such as burgers, meat balls, döner kebab, etc) or other products (such as spreadable meat-based products, etc).

The term "oil", whenever used herein, comprises any edible oil fit for human consumption. Preferably, from a dietary point of view, the oil used according to the invention, is an edible vegetable oil, or a mixture thereof. Edible oils that can be used according to the present invention include: olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil, and mixtures thereof; almond oil and avocado oil. The oils used according to the present invention are preferably liquid at a temperature between 0-25°C and more preferably liquid between 0-15°C, due to their high unsaturated fatty acid content. The oils used according to the invention are not subjected to any treatment for modifying the initial distribution of fatty acids or the degree of their saturation, by processes like interesterification or hydrogenation. According to the present invention the oil has not been pre-emulsified before the addition. From the oils mentioned above, olive oil, sunflower oil, corn oil, soybean oil, canola oil and mixtures thereof are especially preferred, with olive oil being the most preferred oil. Preferably, the oil of the present invention is a virgin olive oil, more preferably an extra virgin olive oil. Moreover, it is preferred that the oil of the present invention is an organic oil, i.e. oil produced according to organic farming standards, verified by accredited organisations. Preferably, the oil is used in substitution of animal fat, which is conventionally added during the preparation of meat-based products, either directly or via the use of muscular meat tissues of high fat content.

In the context of the present invention, the aqueous medium is water or aqueous solution or aqueous dispersion and it is preferably at a liquid state. The temperature of the water or aqueous solution/dispersion is preferably lower than 25°C, more preferably lower than 15°C and most preferably lower than 5°C. Preferably, the water is icy water of a temperature between 0-2°C, prepared for example by adding ice to tap water. In that case, the water is mainly at a liquid state, in a percentage, preferably in the range of 65% (v/v), more preferably in the range of 75% (v/v) and most preferably in the range of 85% (v/v). In the case of an aqueous solution/dispersion, this may contain dissolved components, such as salts (e.g. NaCl), sugars, antioxidants or/and undissolved components, such as herbs, seasonings and vegetables. The aqueous solution/dispersion may also contain one or more non-functional proteins, e.g. proteins added mainly for organoleptic purposes or compositions containing thereof (e.g. hydrolysed proteins, spray-dried broth). The aqueous medium does not contain an emulsifier. More preferably, the aqueous medium does not contain a gelling agent. Even more preferably, neither an emulsifier nor a gelling agent is included in the composition of the aqueous medium. Further, the aqueous medium, does not preferably contain a stabiliser. Moreover, the aqueous medium does not preferably contain additives from the groups of preservatives (e.g. curing salts) or antimicrobial compounds.

According to the present invention, the oil addition protocol comprises the addition of oil with a quantity of an aqueous medium into the meat preparation, in a simultaneous mode. Preferably, the addition protocol comprises the multi-step addition of oil and aqueous medium, for example in 2-5 steps, preferably in 2-3 steps, most preferably in 2 steps. To realise the multi-step addition protocol, the amounts of oil and aqueous medium to be used for the preparation of the oil-containing meat-based products, are subdivided into different portions, having either the same or different sizes, which are added in the meat preparation in multiple steps during the production of the meat paste/meat mass. A portion of oil is then added simultaneously with a portion of aqueous medium. Thus, a single oil addition step starts with the simultaneous addition of an appropriate portion of the oil and aqueous medium to be added and ends when the whole amount of those portions of oil and aqueous medium are fully incorporated into the processed meat preparation, and a subsequent oil addition step does not start until the preceding oil addition step is finished. This multi-step addition of oil together with a quantity of aqueous medium enables a stable incorporation of the oil in the maximum technologically feasible quantity permitted via a direct admixture protocol. The superiority of the present method is particularly demonstrated in cases where processing aids, which could have a positive effect on the incorporation of the fat phase, are not used during the production of the meat paste/meat mass.

According to a preferred aspect of the invention, the process for the preparation of the meat-based product, involves a two step oil addition protocol, which comprises preparing a meat preparation by comminuting or mincing meat pieces, adding sodium chloride or mixtures of sodium chloride with substitutes thereof, and optionally adding at least one ingredient selected from antioxidants, stabilizers, emulsifiers, thickeners or gelling agents, processing aids, colouring agents, sugars, vegetables, microbial cultures, preservatives, flavor enhancers, acidifiers, seasonings, spices, nuts and mixtures thereof; adding a first portion of oil and simultaneously adding a portion of aqueous medium and mixing until the oil and aqueous medium have been incorporated, adding a second portion of oil and simultaneously adding a portion of aqueous medium and mixing until the oil and aqueous medium have been incorporated; and further processing to obtain the meat-based product.

Thus, according to the present invention, the method of direct oil incorporation underlined in the present invention, comprises the following steps:
1) Providing a meat preparation comprising NaCl or mixtures of NaCl with substitutes thereof;
2) Providing oil;
3) Providing an aqueous medium;
4) Adding simultaneously oil (2) and a quantity of the aqueous medium (3) to the meat preparation (1);
5) Further processing to obtain a meat paste or meat mass.

Step (1) of the aforementioned procedure, provides a meat preparation prepared according to practices known in the art. The procedure under step (1) can include comminuting or mincing meat pieces and further processing, e.g. chopping and mixing. Step (1) is preferably carried out in a grinder or/and chopping and mixing apparatus, such as a bowl chopper (cutter). The meat preparation of step (1) includes at least one auxiliary ingredient. According to the present invention, the term "auxiliary ingredients" includes salts, e.g. NaCl or mixtures of NaCl with substitutes thereof; preservatives, e.g. nitrite salts; stabilizers, e.g. phosphate salts; emulsifiers, e.g. milk proteins, plasma proteins, soy proteins, cereal proteins, pea protein, sesame protein, mono- and diglycerides of fatty acids; thickeners or gelling agents, e.g. starch, dietary fibers, gums, gelatin; antioxidants; flavor enhancers; acidifiers; colouring agents; sugars; microbial cultures; seasonings; vegetables; spices; nuts, and mixtures thereof. The meat preparation of step (1) contains at least NaCl or mixtures of NaCl with substitutes thereof. The auxiliary ingredients, with the exception of preservatives (e.g. NaNO2 ≤150ppm) are preferably used in the range of 0.01% to 10% (w/w) of the meat paste/meat mass or as permitted by food regulation. Depending on the type and quality of the starting meat raw materials (e.g. protein content, pH), as well as on the amount of added oil (e.g. 0.5-5% w/w of the meat paste/ meat mass), the use of added emulsifiers in step (1) may not be necessary.

For step (2), suitable oils are described under the term "oil". Preferably, the oil is olive oil. The aqueous medium of step (3) is described under the term "aqueous medium", above. The temperature of the aqueous medium of step (3) is preferably lower than 25°C, more preferably lower than 15°C and most preferably lower than 5°C. Preferably, the water is icy water of a temperature between 0.5-2°C, prepared for example by adding ice to tap water. In that case, the water is mainly at a liquid state, in a percentage, preferably in the range of 65% (v/v), more preferably in the range of 75% (v/v) and most preferably in the range of 85% (v/v).

Step (4) comprises the direct admixture, in a simultaneous mode, of oil (2) and of a quantity of an aqueous medium (3), into the meat preparation of step (1) and can include further processing, e.g. by mixing or mixing and chopping, until the added liquids are fully incorporated in the mixture. Step (4) is preferably carried out in a chopping and mixing apparatus or/and in a mixing apparatus, such as a bowl chopper (cutter) or/and an emulsifying apparatus. The term "simultaneous", as used in the present invention means that oil is added at the same time as a quantity of the aqueous medium is added, or before an added quantity of the aqueous medium is fully incorporated into the meat preparation; or a quantity of the aqueous medium is added before the added oil is fully incorporated into the meat preparation. According to the present invention, the addition of oil occurs simultaneously to the addition of a quantity of the aqueous medium. Other quantities of the aqueous medium may be added into the meat preparation, independently of the oil addition, throughout the process of preparing the meat paste/ meat mass.

In the frame of the present invention, the term "meat paste" refers to finely comminuted meat mass, preferably suited for the production of emulsion-type products, such as frankfurters and parizers. According to the present invention, the term "meat mass" refers to coarsely comminuted meat mass, preferably suited for the production of coarsely comminuted meat-based products, such raw (fresh) country sausages.

An exemplary mixing ratio of oil and aqueous medium is between 1:0.1 to 0.1:1 (w/w), preferably between 1:0.25 to 0.25:1 (w/w), more preferably 1:0.5 to 0.5:1 (w/w). According to a preferred embodiment of the present invention, the oil (2) and the aqueous medium (3) are separately added to the meat preparation and not mixed together before their addition in the meat preparation (1). The process of step (4) is preferably carried out in an appropriate mixing and chopping machine or/and mixing machine, such a bowl chopper (or cutter) or an emulsifying apparatus. According to a preferred aspect of the invention, the simultaneous admixture of (2) and (3) into the mixture of (1), takes place in a multi-step mode. In the latter case, mixing occurs between successive addition steps or preferably during the course of each addition step, as well. According to the present invention no emulsifier is added during the simultaneous addition of the oil and aqueous medium. According to a preferred embodiment, no stabiliser and/or thickener or gelling agent is added into the meat preparation of step (1) simultaneously to the addition of (2) and (3).

Finally, step (5), of the aforementioned procedure, provides a finely comminuted meat paste or coarsely comminuted meat mass, prepared according to practices known in the art. The procedure under step (5) can include further comminuting or/and mixing of the meat preparation, until the desired homogenisation and/or chopping effect has been obtained. Step (5) may also serve for the addition of additional ingredients, such as pieces of fat tissue and meat pieces, which provide typical characteristics in certain products, such as the addition of fat tissue during the making of a Mortadella product. Step (5) is preferably carried out in a chopping and mixing apparatus or/and mixing apparatus, such as a bowl chopper (cutter) or emulsifying apparatus, in a potential sequence with a grinder, if desired. The addition of auxiliary ingredients during step (5) is possible. Depending on the type and quality of the starting meat raw materials (e.g. protein content, pH), as well as on the amount of added oil (e.g. 0.5-5 % w/w of the meat paste/ meat mass), the use of added emulsifiers in step (5) may not be necessary.

The temperature of steps (1), (4) and (5), does not exceed 25 °C, preferably 12 °C and most preferably 8 °C.

Thus, according to a preferred embodiment of the invention, the method of the present invention, based on a multi-step addition of oil and in specific on a two-step addition of the oil, with simultaneous addition of water, is intended for the preparation of cooked emulsion-type sausages and comprises the steps of:
(a) Mixing comminuted meat with water and/or ice, NaCl or mixtures of NaCl with replacers thereof, in an appropriate processing machine, e.g. mixing machine or mixing and chopping machine, optionally in the presence of at least one additional auxiliary ingredient;
(b) Adding a first portion of oil and a quantity of water into the mixture of step (a) and further mixing the resulting mixture until oil and added water have been fully incorporated, whereof the first portion of oil preferably represents 60-80 % (w/w) of the overall amount of oil to be added;
(c) Adding a second portion of oil and a quantity of water to the mixture of step (b) and further mixing the resulting mixture until oil and added water have been fully incorporated, whereof the second portion of oil preferably represents 40-20 % (w/w) of the overall amount of the oil to be added;
(d) Continuing processing until a meat paste is obtained, optionally adding at least one auxiliary ingredient;
(e) Encasing the resulting mixture of step (d) in stuffing materials or in canning materials;
(f) Subjecting the stuffed or canned products from step (e) to a heat treatment;

Steps (a) to (d) are preferably conducted in a mixing or mixing and chopping apparatus, such as a bowl chopper (cutter) and/or emulsifying apparatus or microcutter. The temperature of the meat-based mixture in steps (a) to (d) does not exceed 25 °C, preferably 12 °C and most preferably 8 °C.

In step (a) of the aforementioned procedure, a finely or coarsely comminuted meat preparation is prepared using preferably lean meat. The term "lean meat", used in this context, refers to meat having a fat content of up to 10% (w/w), preferably of up to 8% (w/w), more preferably of up to 5% (w/w) and most preferably of up to 3% (w/w). By the term "meat", any kind of edible meat is included, preferably beef meat, veal meat, pork meat, poultry meat (such as chicken meat, turkey meat, canard meat, goose meat) or fish meat, such as codfish, salmon and tuna. Preferably, the meat used according to the method of the invention is selected from beef meat, veal meat, pork meat, poultry meat (such as chicken meat, turkey meat, canard meat, goose meat) or mixtures thereof. The term "auxiliary ingredients", as used in this context, comprises any ingredient conventionally used for the production of cooked sausages, from the list above. The auxiliary ingredients that may be added during step (a) to (d) are preferably in the ranges as recommended from supplier specifications or according to taste preferences or according to food regulation, typically in the range of 0.01% (w/w) to 10% (w/w) of the meat paste (the exception being the nitrite salts). The amount of water/ice added during step (a) is preferably in the range of 10-50% (w/w) of the total amount of added water in product formulation. Step (a) is conducted according to conventional procedures known in the art for the production of finely or coarsely comminuted meat preparation, suited for cooked emulsion-type sausages. An exemplary method for the production of a finely or coarsely comminuted meat preparation is the following: Lean meat without visible fat is comminuted in the presence of table salt (NaCI) and nitrite salts, water or ice flakes, inside the bowl of a cutter. The process of mixing and/or mixing and chopping continues up to the full homogenization of the mixture.

Step (b) comprises the simultaneous addition of a first portion of oil, and a quantity of water, followed by further processing, e.g. mixing or mixing and chopping. An exemplary ratio of oil and water amounts for each addition step is between 1:0.1 to 0.1:1 (w/w), preferably between 1:0.25 to 0.25:1 (w/w), more preferably 1:0.5 to 0.5:1 (w/w). An amount of oil up to 20% (w/w), preferably up to 15% (w/w) and more preferably up to 10 % (w/w), based on the total meat paste formulation, may be added in this step. An exemplary method for the preparation of the mixture of step (b) is the following: A first quantity of oil and a quantity of water are admixed simultaneously into the mixture of step (a), within the bowl of a bowl chopper (cutter). The combination of water and oil, prior to admixing into the mixture of step (a) is possible, but not preferable. Processing of the mixture continues, e.g. by mixing or mixing and chopping, until the amounts of oil and water are fully incorporated therein. Similarly, step (c) comprises the simultaneous addition of a second portion of oil, and a quantity of water, followed by further processing, e.g. mixing or mixing and chopping. An amount of oil up to 15% (w/w), preferably up to 10% (w/w) and more preferably up to 5% (w/w), based on the total meat paste formulation, may be added in this step. Processing of the resulting meat mixture continues, e.g. by mixing or mixing and chopping, until oil and water have been fully incorporated therein. The total quantity of the added aqueous medium, i.e. water in the meat paste, does not exceed preferably the 40% (w/w), more preferably the 30 % (w/w) and even more preferably the 25% (w/w). The addition of auxiliary ingredients during the course of steps (b) and (c) is possible, but not necessary. According to the present invention no emulsifier is added during the simultaneous addition of the oil and aqueous medium. According to a preferred embodiment, no stabiliser and/or thickener or gelling agent is added into the meat preparation of step (a) simultaneously to the addition of oil and aqueous medium. Finally, step (d) comprises further processing until the desired meat paste is obtained, e.g. by mixing or/and chopping, to achieve a desired chopping effect.

Then, in step (e) the resulting meat paste, is filled in suitable containers, e.g. natural or artificial stuffing materials or in canning materials and is subjected to a heat treatment in step (f). Steps (e) to (f), of the abovementioned procedure, are conducted according to conventional procedures known in the art for the preparation of cooked sausages.

The present invention will now be further illustrated by the following example.

### EXAMPLE

### Example 1: Preparation of olive oil-containing cooked sausages, using different direct admixture protocols.

Example 1, shows a comparison of stability (capacity to stably retain added liquids) of olive oil-containing cooked sausages, wherein olive oil has been incorporated following a different direct oil addition protocol. The common feature amongst the different addition protocol is that olive oil, has been admixed directly in the meat preparation, without pre-emulsification, in its natural form. Three different batches of cooked sausages were made, all having the same product formulation, as shown in Table 1. Table 2 provides the different oil addition protocols employed, indicating the stages for olive oil insertion in the meat preparation, during the preparation of the meat-paste.

**Table 1:**

| Ingredients | Concentration (w/w %) |
|---|---|
| Ham 5D | 50,00 |
| Water | 32,56 |
| Nitrite Salt (18% NO2) | 0,08 |
| Table Salt | 1,80 |
| Phosphates | 0,50 |
| Sodium Erythorbate | 0,056 |
| Extra Virgin Olive Oil | 15,00 |

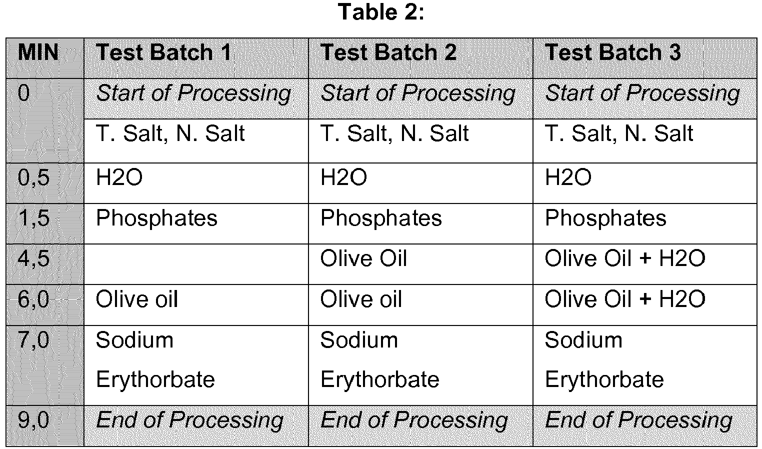

Meat paste preparation: Partially thawed lean meat 5D (-5.5°C) was grinded and placed in the bowl of a bowl chopper, for further processing. Comminution commenced in the presence of Table Salt, Nitrite Salt and water. For batch 1 and 2, the whole amount of water to be added was introduced into the meat preparation during this initial mixing stage. In the case of test batch 3, a quantity of water equal to 10% wt, based on the product formulation, was added in the initial mixing stage. The mixture of phosphates was then added and mixing continued, by gradually increasing the knife cutting speed to 4000rpm. The oil was added directly into the meat preparation during processing, at a different stage for each batch, as shown in Table 2. For test batches 2 & 3, the quantity of oil was subdivided into two portions of 7.5% wt each, based on the meat paste formulation. For test batch 3, the remaining quantity of water to be added, was divided into two portions of 11.28% wt. based on the meat paste formulation, which were added simultaneously with each portion of olive oil, as described in the present patent. The total mixing time for all batches was 9 min and the temperature range maintained during the course of processing in the cutter was between -1 to 8 °C. The resulting mixtures were stuffed into plastic casings to obtain sausage blocks (3.5 kgr each), and were pasteurised, according to known practices in the art. Following thermal processing, the test samples were kept at 4°C until use.

### Freeze-Thaw Test

On the day of analysis, three samples of each test batch were analysed by the freeze & thaw test for their capacity to stably retain the added oil and water. For this purpose, 100gr of the each sample/item, taken from different sampling points, (Right, Center, Left) were cut in cubes (0,5 x 0,5 x 0,5cm) and placed in a freezer, at a temperature of -38°C, for 24 hours. The samples were then left at room temperature (20°C) onto a pre-weighed absorbing paper. The liquid losses (gr) were measured for each test batch (n=3) and are as shown in Table 3.

**Table 3**

| Liquid losses (gr) /100 gr of sample | |
|---|---|
| Samples from test batch 1 | 12.18 (*stdev*=*0.35*) |
| Samples from test batch 2 | 10.68 (*stdev*=*0.24*) |
| Samples from test batch 3 | 8.58 (*stdev*=*0.20*) |

As shown by the results presented above, the samples of the test batch 3 presented less exudation of liquids.

## Claims

1. A process for preparing oil-containing meat-based products, comprising the steps of:
(1) providing a meat preparation comprising NaCl or mixtures of NaCl with substitutes thereof;
(2) providing oil;
(3) providing an aqueous medium;
(4) adding simultaneously oil (2) and a quantity of the aqueous medium (3) to the meat preparation (1);
(5) further processing to obtain a meat paste or meat mass;
wherein the temperature of steps (1), (4) and (5) does not exceed 25°C; wherein the oil of step (2) is olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil, and mixtures thereof, avocado oil, almond oil;wherein the aqueous medium does not contain an emulsifier; wherein no emulsifier is added during the simultaneous addition of the oil and aqueous medium; wherein the oil has not been pre-emulsified before the addition; and wherein the oil is added at the same time as a quantity of the aqueous medium is added, or before an added quantity of the aqueous medium is fully incorporated into the meat preparation; or a quantity of the aqueous medium is added before the added oil is fully incorporated into the meat preparation.

2. The process of claim 1, wherein the simultaneous addition of oil and aqueous medium is carried out in a multi-step mode, preferably in a two-step mode.

3. The process of claim 1 or 2, wherein an oil selected from olive oil, palm oil, soybean oil, canola oil, pumpkin seed oil, corn oil, rape oil, sunflower oil, safflower oil, peanut oil, walnut oil, wheat germ oil, grape seed oil, sesame oil, argan oil, rice bran oil, and mixtures thereof, preferably olive oil, is used.

4. The process of any of claims 1 to 3, wherein the aqueous medium is selected from water, an aqueous solution or aqueous dispersion, preferably of a liquid state.

5. The process of any of the preceding claims, wherein the aqueous medium does not contain a gelling agent.

6. The process of any of the preceding claims, wherein the oil and the aqueous medium are separately added to the meat preparation and not mixed together before the addition.

7. The process of any of the preceding claims, wherein no gelling agent is added during the simultaneous addition of the oil and aqueous medium.

8. The process of any of the preceding claims, wherein the oil and aqueous medium are added to comminuted or minced meat preparation.

9. The process of any of the preceding claims, wherein the oil and the aqueous medium are added in a ratio of 1:0.1 to 0.1:1 (w/w), preferably of 1:0.25 to 0.25:1 (w/w).

10. The process of any of the preceding claims, wherein the meat-based products are finely and/or coarsely comminuted or minced meat-based products, in particular cooked sausages, raw sausages, minced meat-based products and spreadable products.

11. The process of any of the preceding claims, wherein the process comprises preparing a meat preparation by comminuting or mincing meat pieces, adding sodium chloride or mixtures of sodium chloride with substitutes thereof, and optionally adding at least one ingredient selected from antioxidants, stabilizers, emulsifiers, thickeners or gelling agents, processing aids, colouring agents, sugars, vegetables, microbial cultures, preservatives, flavor enhancers, acidifiers, seasonings, spices, nuts and mixtures thereof; adding a first portion of oil and simultaneously adding a portion of aqueous medium and mixing until the oil and aqueous medium have been incorporated, adding a second portion of oil and simultaneously adding a portion of aqueous medium and mixing until the oil and aqueous medium have been incorporated; and further processing to obtain the meat-based product.

12. Meat-based products obtainable by the process according to any of the preceding claims.

## Patentansprüche

1. Verfahren zur Herstellung von ölhaltigen Produkten auf Fleischbasis, umfassend die Schritte:
(1) Bereitstellen einer Fleischpräparation umfassend NaCl oder Gemische von NaCl mit Substituten davon;
(2) Bereitstellen von Öl;
(3) Bereitstellen eines wässrigen Mediums;
(4) gleichzeitiges Zugeben von Öl (2) und einer Menge des wässrigen Mediums (3) zu der Fleischpräparation (1);
(5) weiteres Verarbeiten, um eine Fleischpaste oder Fleischmasse zu erhalten;
wobei die Temperatur der Schritte (1), (4) und (5) 25°C nicht überschreitet; wobei das Öl von Schritt (2) Olivenöl, Palmöl, Sojabohnenöl, Rapsöl, Kürbiskernöl, Maiskeimöl, Rüböl, Sonnenblumenöl, Distelöl, Erdnussöl, Walnussöl, Weizenkeimöl, Traubenkernöl, Sesamöl, Arganöl, Reiskleieöl, und Gemische davon, Avocadoöl, Mandelöl ist; wobei das wässrige Medium nicht einen Emulgator enthält; wobei kein Emulgator während der gleichzeitigen Zugabe von dem Öl und dem wässrigen Medium zugegeben wird; wobei das Öl vor der Zugabe nicht vor-emulgiert worden ist; und wobei das Öl zu der gleichen Zeit zugegeben wird wie eine Menge des wässrigen Mediums zugegeben wird, oder bevor eine zugegebene Menge des wässrigen Mediums voll der Fleischpräparation einverleibt worden ist; oder eine Menge des wässrigen Mediums zugegeben wird, bevor das zugegebene Öl voll der Fleischpräparation einverleibt worden ist.

2. Verfahren nach Anspruch 1, wobei die gleichzeitige Zugabe von Öl und wässrigem Medium in einer mehrstufigen Weise, vorzugsweise in einer zweistufigen Weise, durchgeführt wird.

3. Verfahren nach Anspruch 1 oder 2, wobei ein Öl ausgewählt aus Olivenöl, Palmöl, Sojabohnenöl, Rapsöl, Kürbiskernöl, Maiskeimöl, Rüböl, Sonnenblumenöl, Distelöl, Erdnussöl, Walnussöl, Weizenkeimöl, Traubenkernöl, Sesamöl, Arganöl, Reiskleieöl, und Gemischen davon vorzugsweise Olivenöl, verwendet wird.

4. Verfahren nach irgendeinem der Ansprüche 1 bis 3, wobei das wässrige Medium aus Wasser, einer wässrigen Lösung oder wässrigen Dispersion, vorzugsweise von einem flüssigen Zustand, ausgewählt wird.

5. Verfahren nach irgendeinem der vorhergehenden Ansprüche, wobei das wässrige Medium nicht ein Geliermittel enthält.

6. Verfahren nach irgendeinem der vorhergehenden Ansprüche, wobei das Öl und das wässrige Medium getrennt der Fleischpräparation zugegeben werden und nicht vor der Zugabe zusammengemischt werden.

7. Verfahren nach irgendeinem der vorhergehenden Ansprüche, wobei kein Geliermittel während der gleichzeitigen Zugabe von dem Öl und wässrigen Medium zugegeben wird.

8. Verfahren nach irgendeinem der vorhergehenden Ansprüche, wobei das Öl und das wässrige Medium zu einer zerkleinerten oder zerhackten Fleischpräparation zugegeben werden.

9. Verfahren nach irgendeinem der vorhergehenden Ansprüche, wobei das Öl und das wässrige Medium in einem Verhältnis von 1:0,1 bis 0,1:1 (G/G), bevorzugt 1:0,25 bis 0,25:1 (G/G), zugegeben werden.

10. Verfahren nach irgendeinem der vorhergehenden Ansprüche, wobei die Produkte auf Fleischbasis fein und/oder grob zerkleinerte oder zerhackte Produkte auf Fleischbasis, insbesondere Brühwürste, Rohwürste, Produkte auf Hackfleischbasis und streichfähige Produkte sind.

11. Verfahren nach irgendeinem der vorhergehenden Ansprüche, wobei das Verfahren umfasst Herstellen einer Fleischpräparation durch Zerkleinern oder Zerhacken von Fleischstücken, Zugeben von Natriumchlorid oder Gemischen von Natriumchlorid mit Substituten davon, und wahlweise Zugeben wenigstens eines Bestandteils ausgewählt aus Antioxidantien, Stabilisatoren, Emulgatoren, Verdickungsmitteln oder Geliermitteln, Verarbeitungshilfsstoffen, Farbstoffen, Zuckern, Gemüse, mikrobiellen Kulturen, Konservierungsstoffen, Geschmacksverstärkern, Säuerungsmitteln, Gewürzen, Würzen, Nüssen, und Gemischen davon; Zugeben einer ersten Portion von Öl und gleichzeitiges Zugeben einer Portion von wässrigem Medium und Mischen, bis das Öl und das wässrige Medium einverleibt worden sind, Zugeben einer zweiten Portion von Öl und gleichzeitiges Zugeben einer Portion von wässrigem Medium und Mischen, bis das Öl und das wässrige Medium einverleibt worden sind; und weiteres Verarbeiten, um das Produkt auf Fleischbasis zu erhalten.

12. Produkte auf Fleischbasis, erhältlich durch das Verfahren nach irgendeinem der vorhergehenden Ansprüche.

## Revendications

1. Procédé de préparation de produits à base de viande contenant une huile, comprenant les étapes consistant à :
(1) fournir une préparation de viande comprenant du NaCl ou des mélanges de NaCl avec des succédanés de celui-ci ;
(2) fournir une huile ;
(3) fournir un milieu aqueux ;
(4) ajouter simultanément l'huile (2) et une certaine quantité du milieu aqueux (3) à la préparation de viande (1) ;
(5) procéder à une transformation plus poussée pour obtenir une pâte de viande ou une masse de viande ;
dans lequel la température des étapes (1), (4) et (5) ne dépasse pas 25 °C ; dans lequel l'huile de l'étape (2) est l'huile d'olive, l'huile de palme, l'huile de soja, l'huile de canola, l'huile de graines de potiron, l'huile de maïs, l'huile de colza, l'huile de tournesol, l'huile de carthame, l'huile d'arachide, l'huile de noix, l'huile de germe de blé, l'huile de pépin de raisin, l'huile de sésame, l'huile d'argan, l'huile de riz, et les mélanges de celles-ci, l'huile d'avocat, l'huile d'amande ; dans lequel le milieu aqueux ne contient pas d'émulsifiant ; dans lequel aucun émulsifiant n'est ajouté pendant l'addition simultanée de l'huile et du milieu aqueux ; dans lequel l'huile n'a pas été pré-émulsifiée avant l'addition ; et dans lequel l'huile est ajoutée en même temps que l'on ajoute une certaine quantité du milieu aqueux, ou avant que la quantité ajoutée du milieu aqueux soit entièrement incorporée dans la préparation de viande ; ou une certaine quantité du milieu aqueux est ajoutée avant que l'huile ajoutée soit entièrement incorporée dans la préparation de viande.

2. Procédé selon la revendication 1, dans lequel l'addition simultanée de l'huile et du milieu aqueux est effectuée en plusieurs étapes, de préférence en deux étapes.

3. Procédé selon la revendication 1 ou 2, dans lequel on utilise une huile choisie parmi l'huile d'olive, l'huile de palme, l'huile de soja, l'huile de canola, l'huile de graines de potiron, l'huile de maïs, l'huile de colza, l'huile de tournesol, l'huile de carthame, l'huile d'arachide, l'huile de noix, l'huile de germe de blé, l'huile de pépin de raisin, l'huile de sésame, l'huile d'argan, l'huile de riz et les mélanges de celles-ci, de préférence l'huile d'olive.

4. Procédé selon l'une quelconque des revendications 1 à 3, dans lequel le milieu aqueux est choisi parmi l'eau, une solution aqueuse ou une dispersion aqueuse, de préférence à l'état liquide.

5. Procédé selon l'une quelconque des revendications précédentes, dans lequel le milieu aqueux ne contient pas d'agent gélifiant.

6. Procédé selon l'une quelconque des revendications précédentes, dans lequel l'huile et le milieu aqueux sont ajoutés séparément à la préparation de viande et ne sont pas mélangés l'un à l'autre avant l'addition.

7. Procédé selon l'une quelconque des revendications précédentes, dans lequel aucun agent gélifiant n'est ajouté pendant l'addition simultanée de l'huile et du milieu aqueux.

8. Procédé selon l'une quelconque des revendications précédentes, dans lequel l'huile et le milieu aqueux sont ajoutés à une préparation de viande hachée menu ou hachée.

9. Procédé selon l'une quelconque des revendications précédentes, dans lequel l'huile et le milieu aqueux sont ajoutés selon un rapport de 1:0,1 à 0,1:1 (p/p), de préférence de 1:0,25 à 0,25:1 (p/p).

10. Procédé selon l'une quelconque des revendications précédentes, dans lequel les produits à base de viande sont des produits à base de viande finement et/ou grossièrement hachée menu ou hachée, en particulier les saucissons cuits, les saucisses crues, les produits à base de viande hachée et les produits tartinables.

11. Procédé selon l'une quelconque des revendications précédentes, le procédé comprenant la préparation d'une préparation de viande par hachage menu ou hachage de morceaux de viande, addition de chlorure de sodium ou de mélanges de chlorure de sodium avec des succédanés de celui-ci, et en option addition d'au moins un ingrédient choisi parmi les antioxydants, les stabilisants, les émulsifiants, les épaississants ou agents gélifiants, les adjuvants de fabrication, les agents colorants, les sucres, les légumes, les cultures microbiennes, les conservateurs, les exhausteurs de goût, les acidifiants, les agents de sapidité, les épices, les noix variées et les mélanges de ceux-ci ; addition d'une première portion d'huile et simultanément addition d'une portion du milieu aqueux, et mélange jusqu'à incorporation de l'huile et du milieu aqueux, addition d'une seconde portion d'huile et simultanément addition d'une portion du milieu aqueux et mélange jusqu'à incorporation de l'huile et du milieu aqueux ; puis transformation plus poussée pour obtenir le produit à base de viande.

12. Produits à base de viande pouvant être obtenus par le procédé selon l'une quelconque des revendications précédentes.
